# DEMANDE DE BREVET EUROPEEN

(11) **EP 4 053 085 A1**
(43) Date de publication de la demande: **07.09.2022**
(21) Numéro de dépôt: 22158184.6
(22) Date de dépôt: 23.02.2022
(51) Int. Cl.: C03B 5/00, B09B 3/00, C03C 1/00, B29C 43/02, B29C 43/52, C04B 26/28, D04H 1/4209, D04H 1/4218, D04H 1/587, D04H 1/60, E04B 1/80, E04B 1/74

(54) **PROCÉDÉ DE FABRICATION D'UN ISOLANT THERMIQUE FIBREUX À BASE DE DÉCHETS DE LAINE MINÉRALE**

(30) Priorité: 01.03.2021 FR 2101965
(71) Demandeur: Revibat, 75016 Paris (FR)
(72) Inventeur: HERVE, Quentin, 92600 Asnières-sur-Seine (FR)
(74) Mandataire: Ipsilon

(57) **Abrégé**

L'invention se rapporte à un Procédé de fabrication d'un isolant fibreux à base de déchets de laine minérale, caractérisé en ce qu'il comprend les étapes suivantes :
-une étape de fragmentation par découpage des déchets de laine minérale dans le but d'obtenir des particules de plus petite dimension entre 1.5cm et 10cm en conservant la structure de la matière fibreuse aérienne,
-une étape d'imprégnation en surface des particules ainsi obtenues par un liant afin de garder le matériau fibreux vide d'air,
-une étape de solidification des liaisons entre particules par cuisson de la substance (7) constituée du liant imprégné aux particules de laine minérale sans écrasement de la matière pour conserver sa structure fibreuse aérienne,
-une étape de découpe du produit final solidifié (30) aux dimensions requises prêt à être utilisé dans une installation pour ses propriétés d'isolation et/ou de rigidité thermique.

## Description

La présente invention concerne un procédé de fabrication d'un isolant thermique fibreux performant réalisé à base de déchets de laine de minérale, comme par exemple de la laine de verre.

Généralement les déchets de laine minérale qui peuvent par exemple être constitués de laine de verre, sont principalement enfouis dans des installations de stockage de déchets non dangereux.

Actuellement, les solutions de recyclage de cette laine minérale, consistent à refaire fondre les matériaux fibreux pour en faire une nouvelle matière première destinée à la fabrication de laine minérale. Mais ces solutions ont deux principaux inconvénients :
- elles nécessitent beaucoup d'énergie pour faire refondre les fibres (entre 1010° et 1450° C), et occasionnent une consommation énergétique importante et donc des coûts élevés,
- elles obligent à une sélection des déchets compatibles avec ces procédés, réduisant grandement le champ d'application de ces procédés.

Un procédé selon l'invention permet de recycler une laine minérale en s'affranchissant des inconvénients rencontrés avec les procédés existants.

Afin de lever toute ambiguïté, les termes de « cuisson » et de « chauffage » utilisés dans le cadre d'un procédé selon l'invention, sont équivalents et désignent les conditions de prise du liant.

L'invention a pour objet un procédé de fabrication d'un isolant fibreux à base de déchets de laine minérale.

Selon l'invention, le procédé comprend les étapes suivantes :
- une étape de fragmentation par découpage des déchets de laine minérale dans le but d'obtenir des particules de plus petite dimension entre 1.5cm et 10cm en conservant la structure de la matière fibreuse aérienne,
- une étape d'imprégnation en surface des particules ainsi obtenues par un liant afin de garder le matériau fibreux vide d'air,
- une étape de solidification des liaisons entre particules par cuisson de la substance constituée du liant imprégné aux particules de laine minérale sans écrasement de la matière pour conserver sa structure fibreuse aérienne,
- une étape de découpe du produit final solidifié aux dimensions requises prêt à être utilisé dans une installation pour ses propriétés d'isolation et/ou de rigidité thermique.

Le principe d'un procédé selon l'invention est de fabriquer un produit final qui n'est pas plein contrairement aux procédés de fabrication déjà existants. En effet, dans les procédés de l'état de la technique la fibre de laine minérale recyclée est noyée dans un liant puis est très fortement compressée de façon à obtenir un matériau final plein, dont le volume n'est occupé que par des fibres de laine minérale et du liant durci. Or, de tels matériaux pleins présentent des propriétés d'isolation thermique très limitées. Dans ces procédés existants la laine minérale est alors utilisée comme une charge. Le principe d'un procédé de fabrication selon l'invention consiste à garder la structure aérienne et fibreuse de la laine minérale, sans la compresser exagérément, dans le but d'obtenir un produit final aéré possédant des propriétés d'isolation thermiques très élevées, puisque les fibres de laine minérale ne vont pas occuper l'intégralité du volume du produit final obtenu. De cette manière, le produit final obtenu avec un procédé selon l'invention, possède des propriétés d'isolation thermique élevées, avec des valeurs de conductivité thermique comprises entre 0.035 W/m.K et 0.045 W/m.K. Les déchets de laine minérale qui sont traités au moyen d'un procédé selon l'invention, peuvent provenir de plusieurs sources : les déchets de déconstruction, des laines minérales neuves en provenance de chantiers neufs ou de rénovation ; des déchets de production d'usines. Ces déchets peuvent se présenter avec ou sans couche de surface (par exemple de type kraft, aluminium, bitume, voile de verre...). Les déchets de laine minérale peuvent par exemple être de type laine de verre ou laine de roche. Le principe d'un procédé selon l'invention est d'abord de mettre les déchets de laine minérale sous la forme de particules au moyen d'une fragmentation par découpage, puis d'imprégner ces particules avec un liant apte à être durci au moyen d'un chauffage, dans le but d'obtenir un produit final solidifié constitué par lesdites particules de laine minérale et par le liant. Le produit final peut par exemple être mis en forme dans un moule qui est utilisé lors de l'étape de chauffage, et/ou peut par exemple être découpé sous forme de panneaux. De façon préférentielle, ce produit possède des propriétés d'isolation acoustique et/ou de tenue mécanique en fonction de ses caractéristiques dimensionnelles et géométriques. A l'issu de ce procédé, le produit final peut, soit être fini et être ainsi directement utilisé tel quel dans une installation pour ses propriétés d'isolation et ou de tenue mécanique, ou être semi-fini dans l'attente d'être intégré comme élément d'un produit fini. Le produit final obtenu peut être utilisé, soit directement en tant que mur ou plafond d'une installation, soit en tant que complément de ce mur ou de ce plafond afin de modifier ses propriétés d'isolation thermique et/ou acoustique. Le liant peut revêtir toute forme, et peut par exemple inclure des colles, l'important étant qu'il possède des propriétés permettant d'agglomérer les particules. Un intérêt à obtenir des particules dont les dimensions sont comprises entre 1.5cm et 10cm, est de pouvoir obtenir avant l'étape de chauffage, une substance homogène dans laquelle les particules de laine minérale sont équitablement réparties dans le liant. L'objet d'un procédé selon l'invention est d'obtenir un produit final homogène, dont les propriétés d'isolation et/ou de tenue mécanique sont constantes quelle que soit la zone du produit considérée. Avantageusement, la dimension des particules est inférieure ou égale à 5cm, et de façon encore plus avantageuse, est inférieure ou égale à 2cm.

Selon une caractéristique possible de l'invention, le liant utilisé lors de l'étape de d'imprégnation est à choisir parmi des liants organiques, des résines acryliques, et des liants à base de polysaccharides sous forme sèche ou humide. Le liant doit permettre d'obtenir une substance homogène avec les particules de laine minérale avant l'étape de chauffage, qui soit susceptible de durcir après cette étape de chauffage. Les liants listés ci-avant sont des exemples de liants particulièrement adaptés à un procédé selon l'invention, mais qui ne sont nullement limitatifs dans le cadre d'un tel procédé. Le liant peut aussi être une colle à froid qui évitera le chauffage dans l'étape de formage du produit.

Selon une caractéristique possible de l'invention, l'étape d'imprégnation est réalisée au moyen d'une technique à choisir parmi un trempage, une pulvérisation, une brumisation et une injection. Il s'agit de techniques particulièrement adaptées à un procédé selon l'invention, mais qui ne sont nullement limitatifs dans le cadre d'un tel procédé.

Selon une caractéristique possible de l'invention, lors de l'étape d'imprégnation, le taux du liant en masse sèche est compris entre quelques % et 25%. Préférentiellement ce taux est compris entre 2% et 10%. Ce taux du liant en masse sèche peut varier, car il dépend de la nature du liant utilisé et des caractéristiques techniques nécessaires pour le produit final.

Selon une caractéristique possible de l'invention, le procédé comprend une étape de mélange du liant avec les particules de laine minérale afin d'obtenir un produit résultant homogène. Cette étape permet ainsi d'obtenir une substance constituée du liant et des particules de laine minérale qui soit constante dans tout son volume, sans montrer de zones pauvres en particules de laine minérale qui pourrait biaiser les propriétés d'isolation thermique ou mécanique du produit final obtenu. Ce mélange peut par exemple être réalisé au moyen d'un malaxeur, d'un agitateur, d'un mélangeur à pales, cyclone ou être réalisé dans une cuve mélangeur (tambour rotatif).

Selon une caractéristique possible de l'invention, l'étape de chauffage est conduite avec une température variable, correspondant à la température de durcissement du liant utilisé. L'objectif de cette étape de chauffage est d'obtenir un produit final solidifié. Elle doit donc être conduite en fixant une température de chauffage supérieure ou égale à la température de durcissement du liant utilisé. Le terme « variable » signifie que la température de chauffage dépend de la nature du liant utilisé, et non pas qu'elle varie durant cette étape de chauffage.

Selon une caractéristique possible de l'invention, le procédé comprend une étape de façonnage durant l'étape de cuisson pour obtenir un produit final dont la densité est comprise entre 50kg/m3 et 250kg/m3 ladite étape permettant de conserver une structure fibreuse aérienne grâce à l'utilisation de cales ou de moules, qui vont limiter la course d'éléments de compression. En effet, en fonction des besoins rencontrés au niveau du produit final obtenu, il peut être intéressant de compacter ce produit durant l'étape de chauffage ou avant celle-ci, afin d'obtenir le produit ayant les meilleures propriétés mécaniques et d'état de surface. Cette étape de façonnage vise à densifier le produit final, sans pour autant procéder à une compression trop importante qui pourrait conduire à un produit final plein. Le produit final obtenu lors de cette étape n'est pas plein, car les fibres de laine minérale ne vont pas occuper l'intégralité du volume de ce produit final. Puisque les fibres de laine minérale ne sont pas compressées au point d'occuper tout le volume du produit final obtenu, ledit produit final va présenter de très bonnes propriétés d'isolation thermique. Les cales vont permettre de limiter la course d'éléments de compression, tels que par exemple des plateaux mobiles, afin de limiter ladite compression.

Selon une caractéristique possible de l'invention, le procédé comprend une étape de dépôt d'une couche de surface dont la composition est différente de celle du produit final obtenu. Préférentiellement cette étape de dépôt de cette couche de surface est réalisée lors de l'étape de chauffage ou après celle-ci. Cette couche de surface peut être appliquée sur une ou plusieurs faces du produit obtenu. Ce revêtement peut être de type : papier kraft, feuille d'aluminium, voile de verre, panneau de bois ou tout autre revêtement de surface. Cette couche de surface peut également être constituée par un revêtement déposé par tout type de technique, comme par exemple un spray.

Selon une caractéristique possible de l'invention, le procédé comprend une étape de mise en forme du produit solidifié final obtenu, cette étape de mise en forme comprenant au moins une étape à choisir parmi un découpage, une rectification de surface afin d'obtenir une bonne planéité, et un usinage spécifique pour obtenir une gorge. En effet, le produit final obtenu avec un procédé selon l'invention ayant une destination et/ou une application particulière, il peut être mise en forme par tout moyen pour répondre à ces exigences de destination et ou d'application particulière. Le produit final peut également être conditionné sous forme de panneaux. La mise en forme du produit final permet d'adapter les caractéristiques structurelles de ce produit au besoin rencontré.

Un procédé selon l'invention présente l'avantage de comprendre plusieurs étapes simples, dont la chronologie judicieuse permet d'aboutir à un produit surprenant, directement réutilisable dans une installation pour ses propriétés d'isolation thermique performantes équivalentes aux laines minérales neuves et/ou de rigidité mécanique.

On donne ci-après, une description détaillée d'un mode de réalisation préféré d'un procédé de fabrication d'un isolant thermique basé sur le recyclage de déchets selon l'invention, en se référant aux figures suivantes :
[Fig. 1] représente une vue de côté d'une installation destinée à réaliser un procédé selon l'invention, ladite installation comprenant des appareillages permettant de conduire une étape de fragmentation de la laine minérale, une étape d'imprégnation d'un liant, et une étape de mélange du liant avec les particules de laine minérale,
[Fig. 2] représente une vue de côté d'une table de cadrage destinée à recevoir le mélange de liant et des particules de laine minérale,
[Fig. 3] représente une vue de côté d'une presse à plaquer, d'un four à batch ou d'une étuve, destinées à réaliser une étape de compactage léger retenu par des cales ou des moules pour ne pas écraser la matière fibreuse et garder les vides d'air, et de chauffage du mélange de liant et des particules de laine minérale pour la réalisation d'un procédé selon l'invention,
[Fig. 4] représente une vue de côté d'une découpe pour la mise en forme d'un produit final obtenu au moyen d'un procédé selon l'invention,
[Fig. 5] représente une vue de côté d'une palette pour le stockage et le transport du produit obtenu au moyen d'un procédé selon l'invention et déjà mis en forme.

Un procédé de recyclage selon l'invention vise à transformer des déchets de laine minérale en des objets solides finis ou semi-finis, aptes à être utilisés dans des installations pour leur propriété d'isolation thermique et/ou acoustique et/ou mécanique. Le terme « fini » signifie que le produit issu du procédé de recyclage sera conditionné pour pouvoir être directement utilisé en tant que tel dans l'installation. Le terme « semi-fini » signifie que le produit issu dudit procédé est dans l'attente d'être intégré comme élément d'un produit fini.

Un procédé selon l'invention permet de recycler des déchets de laine minérale, pouvant provenir de plusieurs sources : les déchets de déconstruction, des laines minérales neuves en provenance de chantiers neufs ou de rénovation ; des déchets de production d'usines. Dans le cadre d'un procédé selon l'invention, ces déchets peuvent se présenter avec ou sans couche de surface (par exemple de type kraft, aluminium, bitume, voile de verre, panneau de bois...). Les déchets de laine minérale peuvent par exemple être de type laine de verre ou laine de roche.

Les matières premières à recycler pourront faire l'objet d'un traitement préalable de nettoyage, de dépoussiérage, de lavage... si leur état le nécessite. Comme ci-avant évoqué, dans le cas de la présence d'une couche de surface (kraft, aluminium...) sur les déchets de laine minérale, ces couches de surface pourront être préalablement retirées, dans l'optique d'obtenir avec le présent procédé un produit de meilleure qualité.

Un procédé de recyclage selon l'invention comprend les étapes suivantes :

### A- une étape de fragmentation par découpage des déchets de laine minérale

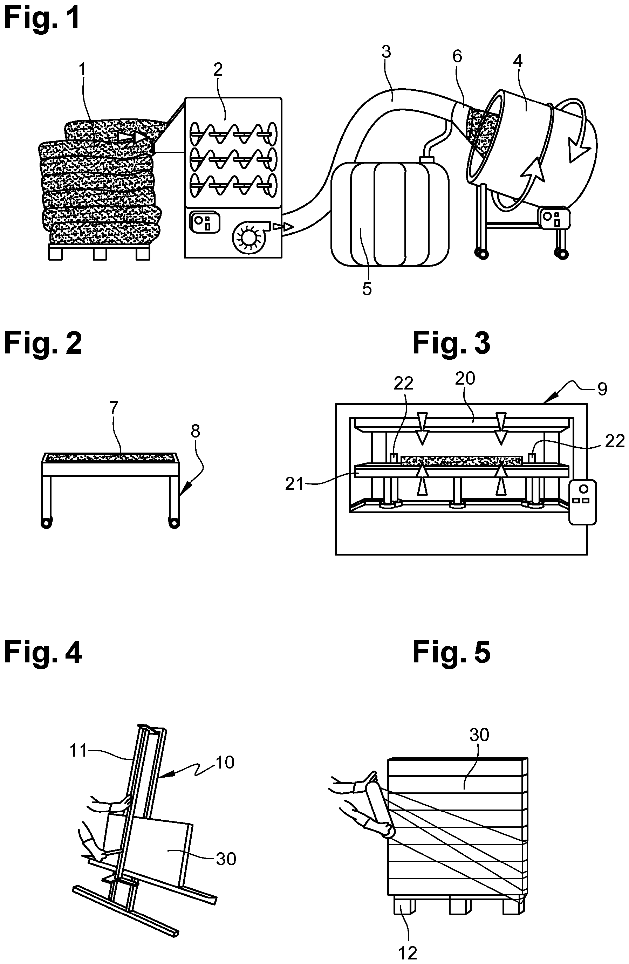

Comme l'illustre la figure 1, les déchets 1 sont acheminés à l'état brut vers un appareillage 2, pouvant par exemple être un broyeur ou une déchiqueteuse, qui va servir à découper lesdits déchets 1 en petits fragments, dont les dimensions sont comprises entre 1.5cm et 10cm, et de façon avantageuse inférieures à 5cm et de façon encore plus avantageuse, inférieures ou égales à 2cm. Avant d'être découpés en petits fragments, les déchets 1 auront pu subir une étape préalable de décompactage.

### B - une étape d'imprégnation d'un liant

En se référant à la figure 1, les fragments de petite dimension sont évacués de l'appareillage 2 de découpe au moyen d'un conduit 3 reliant ledit appareillage 2 à un mélangeur 4. Un réservoir 5 de liant est en communication fluidique avec le conduit 3, de façon à permettre aux fragments de petite dimension circulant dans ledit conduit 3 d'être imprégnés avec ledit liant avant d'atteindre le mélangeur 4. Le liant peut aussi être directement injecté dans le mélangeur 4 où les fragments de laine minérale ont été acheminés. Le liant peut être constitué par une multitude de matériaux, et peut donc être par exemple constitué de liants organiques (résines phénoliques (formol-phénol ou urée-formol-phénol)), de résines acryliques, de liants à base de polysaccharides (liant à base végétale, biosourcé). Cette notion de liant recouvre la notion de colle. Différentes méthodes peuvent être utilisées pour réaliser cette imprégnation, comme par exemple le trempage, l'injection, la pulvérisation, la brumisation ou tout autre procédé. Dans le cas de la pulvérisation, le liant sera pulvérisé sous forme liquide sur les éléments de laine minérale fragmentés. Mais le liant peut aussi être sous forme sèche et être mélangé avec les particules de laine minérale.

Le taux de liant en masse sèche, par rapport aux déchets 1 de laine minérale à traiter, dépend des caractéristiques techniques du liant et du niveau de performance qui sera attendu pour le produit fini ou semi-fini. Il pourra varier de quelques % à 25% et préférablement de 2% à 10%.

### C - une étape d'homogénéisation.

La substance constituée par les fragments de petite dimension et le liant, sort du conduit 3 au moyen d'une buse 6 avant d'atteindre le mélangeur 4, où elle est mélangée afin d'obtenir un matériau continu et homogène, dans lequel les fragments seront équitablement répartis. Ce mélangeur 4 recouvre une multitude d'appareillage, comme par exemple ceux impliquant des tambours rotatifs, ou des cuves incluant un dispositif de mélange comme des mélangeurs à pales.

L'étape de fragmentation des déchets 1 de laine minérale, a pour finalité d'obtenir des éléments suffisamment petits pour être bien imprégnés de liant tant en gardant ses caractéristiques fibreuses et aériennes, capables d'emprisonner de l'air pour une grande performance d'isolation. En se référant à la figure 2, une fois que la substance 7 constituée par le liant et les fragments de petite dimension a été suffisamment mélangée dans le mélangeur 4, elle est récupérée sur une table de cadrage 8 ou un tapis roulant dans le cas d'un procédé à flux continu.

### D - Une étape de durcissement du liant

La table de cadrage 8 chargée avec la substance 7 est acheminée vers un appareillage de chauffage 9 où elle est cuite. La substance 7 est déchargée de la table de cadrage 8 puis est placée dans ledit appareillage 9. Cette étape de cuisson peut être effectuée par tout type de procédé permettant d'atteindre la température et le temps de durcissement du liant, qui dépendra de ses caractéristiques techniques. Les machines mises en œuvre pour cette étape de cuisson, peuvent être de type à plateau chauffant ou fours, et la technique de chauffage peut par exemple être un étuvage. Tout autre procédé de chauffage peut également convenir. La cuisson peut être en continu dans un four tunnel ou en statique par batch.

### E - une étape de formage

En se référant à la figure 3, une fois que la substance 7 homogène constituée du liant et des fragments de petite dimension a été placée dans l'appareillage de durcissement du liant, elle peut être simultanément pressée au moyen par exemple du rapprochement de deux plateaux 20, 21, afin d'obtenir des densités de produits différentes, ou bien des formes spécifiques dans des moules. La force de pressage sera limitée par des cales 22 ou des moules qui vont limiter la course des plateaux 20, 21 afin de garantir le non écrasement de la matière pour conserver sa structure fibreuse aérienne. Les densités des produits issus de la cuisson pourront par exemple varier de 50 kg/m3 à 250 kg/m3. Dans le cas du pressage de formes spécifiques, il pourra être fabriqué, par exemple, des coques semi-sphériques ou des palettes à plot, ou tout autre forme. Il est à noter que lors de cette étape de formage, les fibres de laine minérale ne sont pas comprimées trop fortement au point d'occuper l'intégralité du volume du produit final obtenu. Le produit final n'étant pas constitué que de fibres minérales, il va donc présenter de très bonnes propriétés d'isolation thermique.

### F - une étape de surfaçage

Lors de l'étape de cuisson, une couche de surface pourra être appliquée sur une ou plusieurs faces des produits. Cette couche de surface qui est assimilable à un revêtement peut par exemple être de type : papier kraft, feuille d'aluminium, voile de verre, panneau de bois ou tout autre revêtement de surface.

### G- une étape de marquage

Le produit pourra aussi être marqué, soit par impression, soit par brûlage, par exemple au moyen d'un laser. Ce marquage a pour but d'identifier le produit obtenu par un procédé selon l'invention au moyen d'informations comprenant par exemple la date de fabrication, le lieu de fabrication, les composants du produit, la provenance du produit, etc..

### H - Une étape de découpage et/ou de rectification

En se référant à la figure 4, le produit solide, issu de l'étape de cuisson, pourra être coupé aux dimensions nécessaires à son emploi, comme produit fini ou semi-fini au moyen d'un appareillage 10 impliquant une scie 11 ou de tout autre système de découpe comme une guillotine. Il pourra alors prendre par exemple l'apparence de panneaux plus ou moins étendus. Il pourra également être rectifié sur un ou plusieurs de ses côtés, pour atteindre un niveau de planéité suffisant, nécessaire à son emploi, comme produit fini ou semi-fini. Le produit pourra aussi faire l'objet de découpes spécifiques, telles que par exemple des gorges ou des perçages, permettant son emploi futur.

### I - Une étape de palettisation

En se référant à la figure 5, une fois que le produit final issu du procédé de recyclage selon l'invention, a été fabriqué dans sa forme finale, par exemple sous forme de panneaux, ils sont superposés sur un socle 12 puis emballés seuls ou à plusieurs unités avant d'être livrés à un client.

## Revendications

1. Procédé de fabrication d'un isolant fibreux à base de déchets de laine minérale, **caractérisé en ce qu'**il comprend les étapes suivantes :
- une étape de fragmentation par découpage des déchets de laine minérale dans le but d'obtenir des particules de plus petite dimension entre 1.5cm et 10cm en conservant la structure de la matière fibreuse aérienne,
- une étape d'imprégnation en surface des particules ainsi obtenues par un liant afin de garder le matériau fibreux vide d'air,
- une étape de solidification des liaisons entre particules par cuisson de la substance (7) constituée du liant imprégné aux particules de laine minérale sans écrasement de la matière pour conserver sa structure fibreuse aérienne,
- une étape de découpe du produit final solidifié (30) aux dimensions requises prêt à être utilisé dans une installation pour ses propriétés d'isolation et/ou de rigidité thermique.

2. Procédé de fabrication selon la revendication 1 **caractérisé en ce que** le liant utilisé lors de l'étape de d'imprégnation est à choisir parmi des liants organiques, des résines acryliques, et des liants à base de polysaccharides sous forme sèche ou humide.

3. Procédé de fabrication selon l'une quelconque des revendications 1 ou 2, **caractérisé en ce que** l'étape d'imprégnation est réalisée au moyen d'une technique à choisir parmi un trempage, une pulvérisation, une brumisation et une injection.

4. Procédé de fabrication selon l'une quelconque des revendications 1 à 3, **caractérisé en ce que** lors de l'étape d'imprégnation, le taux du liant en masse sèche est compris entre quelques % et 25%.

5. Procédé de fabrication selon l'une quelconque des revendications 1 à 4, **caractérisé en ce qu'**il comprend une étape de mélange du liant avec les particules de laine minérale afin d'obtenir un produit résultant homogène.

6. Procédé de fabrication selon l'une quelconque des revendications 1 à 5, **caractérisé en ce que** l'étape de solidification des liaisons entre particules par cuisson est conduite avec une température correspondant à la température de durcissement du liant utilisé.

7. Procédé de fabrication selon l'une quelconque des revendications 1 à 6, **caractérisé en ce qu'**il comprend une étape de façonnage durant l'étape de cuisson pour obtenir un produit final dont la densité est comprise entre 50kg/m3 et 250kg/m3, ladite étape permettant de conserver une structure fibreuse aérienne grâce à l'utilisation de cales ou de moules qui vont limiter la course d'éléments de compression (20, 21).

8. Procédé de fabrication selon l'une quelconque des revendications 1 à 8, **caractérisé en ce qu'**il comprend une étape de dépôt d'une ou plusieurs couches de surface dont la composition est différente de celle du produit final obtenu.

9. Procédé de fabrication selon l'une quelconque des revendications 1 à 9, **caractérisé en ce qu'**il comprend une étape de mise en forme du produit solidifié final (30) obtenu, cette étape de mise en forme comprenant au moins une étape à choisir parmi un découpage, une rectification de surface afin d'obtenir une bonne planéité, et un usinage spécifique pour obtenir une gorge.
